# EUROPEAN PATENT SPECIFICATION

(11) **EP 0 737 167 B1**
(45) Date of publication and mention of the grant of the patent: **06.05.1999**
(21) Application number: 95904555.0
(22) Date of filing: 29.12.1994
(51) Int. Cl.: C01G 49/14

(54) **PROCESS FOR THE PREPARATION OF A SULFATE- AND HYDROXIDE-BASED FERRIC COMPOUND**
VERFAHREN ZUR HERSTELLUNG VON VERBINDUNGEN AUF DER BASIS VON EISEN(III)SULFAT UND HYDROXID
PROCEDE DE PREPARATION D'UN COMPOSE FERRIQUE A BASE DE SULFATE ET D'HYDROXYDE

(30) Priority: 30.12.1993 FI 935946
(43) Date of publication of application: 16.10.1996
(73) Proprietor: KEMIRA OY, SF-02271 Espoo (FI)
(72) Inventor: JÄFVERSTRÖM, Stefan, S-703 75 Örebro (SE); TUOMARLA, Juhani, FIN-02200 Espoo (FI); KENAKKALA, Timo, Helsingborg (SE)
(74) Representative: Träskman, Berndt Hilding
(86) International application number: FI9400588
(87) International publication number: WO9518069

(56) References cited:
- AU-B- 506 591
- DE-A- 2 835 697
- DE-A- 4 015 804
- DE-C- 2 654 720

## Description

The invention relates to a process for the preparation of a pure and solid, sulfate- and hydroxide-based ferric compound. According to the method it is possible to prepare from impure raw materials, such as ferrous sulfate or ferric hydroxide, a pure, solid and useful iron compound.

Iron is one of the major impurities in waste waters. This is due to a plurality of factors, such as the high reactivity and abundance of iron. Iron is present in conjunction with almost all other metals in their ores. Iron also reacts readily with most acids and forms aqueous or water-soluble iron salts. The principal sources of the iron in waste waters are the waste solutions from steel pickling, zinc electrolysis, titanium pigment preparation, mining, extraction of non-iron metals, metal coating of iron, and copper extraction.

Examples of iron removal methods used in industry include various complicated regeneration methods used for steel pickling solutions, evaporation combined with the crystallization of iron salts, transportation deep into the ground, disposal in storage basins, disposal by dumping in the sea, and disposal by neutralization. There is thus in the art a clear need for effective and inexpensive removal of iron from metallurgical processes and for its effective reuse.

Iron salts have been used for the treatment of waste water for more than 80 years. The low solubility of trivalent iron, i.e. ferric iron, within a wide pH range is a clear advantage over aluminum salts. Within the pH range (pH 2-10) important in water and waste water treatment, the salts of bivalent iron, i.e. ferrous iron, are slightly soluble, for which reason the ferrous iron content of the ferric salts to be used in water purification should be minimized for the purpose of obtaining pure water. Normally the water treatment chemical, such as ferric sulfate, is prepared by dissolving the raw material in sulfuric acid and by oxidizing Fe(2+) to Fe(3+).

Ferric sulfate may be prepared either from ferrous sulfate or from iron oxides or hydroxides. Ferrous sulfate for its part is prepared by dissolving iron in sulfuric acid. Commercial ferric sulfate has been prepared conventionally by oxidizing ferrous sulfate by means of either hydrogen peroxide or nitric acid. Depending on the molar ratio of iron to sulfate, either monomeric ferric sulfate or polymeric polyferric sulfate is thereby formed.

The commercially produced ferric or polyferric sulfate with its impurities remains in an aqueous solution, and no satisfactory purification step has so far been found for the processes. Therefore the heavy metals present in the raw material have also been left in the end product of the process. Environmental legislation becoming stricter, water treatment and other such chemicals which do not contain toxic heavy metals will be needed in the future, and thus the processes so far used for the preparation of ferric and ferrous sulfate will require workable and economically profitable purification steps.

GB-1 469 193 discloses a process for continuous production of ferric hydroxysulfate by heating ferrous sulfate (FeSO₄ x 7 H₂O) with hot, oxygen rich gases the temperature of which is within the range 46-480°C in a reaction zone into which a portion of the end product is recycled so that the zone will receive a primary material which contains recycled end product in an amount of only 10-25% by weight. The substantially dry feed is heated in a long reaction zone which rotates about its central axis and is divided into a plurality of oblong chambers, electric heating generating a temperature which is at maximum 480°C, and preferably air heated to a temperature of 250-300°C is fed into the chambers. This state-of-the-art system is very expensive and is not as such usable for the preparation of iron hydroxysulfate. Furthermore, the process lacks the capacity to separate from the initial material, i.e. iron sulfate, the impurities present in it, such as toxic heavy metals.

DE 40 15 804 discloses an improved process for the oxidation of a ferrous salt into a ferric salt capable of acfing as a flocking chemical.

DE 28 35 697 relates to a process for the precipitation of jarosite from ferrosulfate solutions by contacting a ferrous sulfate solution with an alkali metal compound and gaseous oxygen in several reaction zones and by adding steam of 175°C to 200°C to the last zone.

AU 50 65 91 deals with the preparation of jarosite by oxidizing and hydrolyzing ferrous sulfate. The reference uses 80°C to 100°C and long reaction times to keep the ferrous sulfate in solution during the reaction.

An object of the invention is to provide a new process for the preparation of a pure and useful iron chemical from impure raw materials. It is also an object of the invention to refine the ferrous sulfate produced as a byproduct of inorganic processes, such as the titanium dioxide process, into a useful iron compound. At the same time it is an object to solve the environmental problem caused by ferrous sulfate, pickling solutions based on hydrochloric acid or sulfuric acid, and iron hydroxide precipitates. More precisely, the invention aims at the preparation of a pure ferric compound, usable as a water treatment chemical, based on sulfate and hydroxide.

The objects of the invention stated above have now been achieved with a process of a new type for the preparation of a ferric compound based on sulfate and hydroxide, the process being mainly characterized by the facts stated in the characterizing clause of Claim 1. It has thus been realized that a pure and solid ferric compound based on sulfate and hydroxide can be prepared by the steps of:
a) a sulfate- and/or chloride-based ferric salt soluble in an acid aqueous solution is prepared
   a1) by recovering a sulfate- and/or chloride-based ferric salt produced as a product of an industrial process, soluble in an acid aqueous solution,
   a2) by oxidizing ferrous sulfate FeSO₄ in a sulfuric acid solution,
   a3) by sulfating ferric hydroxide Fe(OH)₃ with sulfuric acid,
   a4) by chlorosulfating ferric hydroxide Fe(OH)₃ with sulfuric acid and hydrochloric acid,
   a5) by chlorinating ferric hydroxide Fe(OH)₃ with hydrochloric acid, or
   a6) by oxidizing ferrous chloride FeCl₂ in a hydrochloric acid solution,
b) an acid aqueous solution of said sulfate- and/or chloride-based ferric salt is prepared,
c) said acid aqueous solution is maintained in the presence of sulfate ions for 2-12 h at a temperature of 150-220°C if ferric hydroxysulfate is prepared, or for 2-12 h at a temperature of 120-140°C, if sodium jarosite is prepared, in order to produce a precipitate of the said sulfate- and hydroxide-containing ferric compound by hydrolysis, and
d) said sulfate- and hydroxide-containing ferric compound which is selected from ferric hydroxy sulfate and sodium jarosite, is separated in a pure and solid form from the acid aqueous solution.

In the process according to the invention, the initial material used is a sulfate- and/or chloride-based ferric salt, such as ferric sulfate and/or polyferric sulfate and/or ferric chlorosulfate and/or ferric chloride, or a mixture thereof. These initial materials may be used in the form in which they are obtained from various industrial processes, but according to one preferred embodiment they are obtained by oxidizing in point a) above a sulfate- and/or chloride-based ferrous salt.

According to one embodiment, the ferrous salt of step a) is ferrous sulfate, in which case the sulfate-based ferric salt, such as ferric sulfate and/or polyferric sulfate, is prepared by causing ferrous sulfate, sulfuric acid and an oxidant to react by contacting them with each other in an aqueous solution at an elevated temperature. Preferably they are contacted with each other at a temperature of 80-160°C and a pressure of 3-10 bar, most preferably at a temperature of 120-130°C and a pressure of 5-7 bar. Under these conditions, a sulfate-based ferric salt, i.e. ferric sulfate, is formed. The said oxidation of ferrous sulfate to ferric sulfate is deemed to occur mainly in accordance with the following reaction equation (I):

4FeSO₄ + 2H₂SO₄ + O₂ = 2Fe₂(SO₄)₃ + 2 H₂O (I)

When ferrous sulfate is oxidized in the presence of sulfuric acid and an oxidant, it is advantageous to use the said reagents so that the molar ratio SO₄/Fe(II) is approximately 1.10-1.50. If it is desired to oxidize the ferrous sulfate to monomeric ferric sulfate, it is preferable to use such amounts of sulfuric acid and ferrous sulfate that the molar ratio SO₄/Fe will be in the order of 1.40-1.50. If, instead, it is desired to prepare polyferric sulfate, preferably the amounts of sulfuric acid and ferrous sulfate should be such that the molar ratio SO₄/Fe will be in the order of 1.10-1.40.

As stated above, the raw material of the process according to the invention may also be a chloride-based ferric salt. It is hydrolyzed in step c) of the process in the presence of sulfate ions into a ferric compound based on sulfate and hydroxide. According to one embodiment, the said chloride-based ferric salt is obtained by oxidizing a chloride-based ferrous salt, such as ferrous chloride.

Steps a) - c) of the process according to the invention may be carried out separately in succession, or advantageously they may be carried out all in one step. In the latter case, the process may start with an aqueous solution to which the raw material is added and on which the said procedures are suitably performed by changing the reaction conditions and by adding reagents. It is also possible to add all the reagents immediately at the beginning and to perform in one single heating step the preparation and hydrolysis of the said ferric salts. If the ferric salt based on sulfate and/or chloride is prepared by oxidation, and the solution obtained from the oxidation is used as such for the hydrolysis of step c), it is advantageous to optimize the concentrations of the ions participating in the reactions, such as the sulfate, chloride and ferric ions, with respect to both the formation of ferric salt and hydrolysis. The idea of the invention is based exactly on this possibility.
According to one embodiment, the oxidation of point a) and the hydrolysis of step c) are combined by causing the ferrous sulfate, or the ferrous sulfate and ferrous chloride, to react with water and an oxidant. The reaction will occur. when preparing ferric hydroxysulfate, during heating for 2-12 h at a temperature of 150-220°C. When preparing sodium jarosite, a temperature of 120-140°C, most preferably a temperature of 120-130°C is used. In this case the pressure may be raised to 3-10 bar, preferably to 5-7 bar. In a ferrous sulfate oxidation hydrolysis, ferric hydroxysulfate is formed mainly according to the following reaction formula (II):

4FeSO₄ + 2H₂O + O₂ = 4Fe(OH)SO₄ (II)

When, according to one embodiment of the invention, the ferrous sulfate and ferrous chloride are introduced into step a) in the form of a pickling solution based on sulfuric acid or hydrochloric acid, the oxidation of step a) and the hydrolysis of step c) may be combined by allowing the pickling solution based on hydrochloric acid or sulfuric acid to react, at an elevated temperature, with an oxidant. The heating is, in the case of sodium jarosite, carried out preferably to a temperature of approximately 80-160°C, most preferably to a temperature of 120-130°C, in which case a preferred pressure is approximately 3-10 bar, most preferably approximately 5-7 bar. In this case the oxidation of the ferrous sulfate to ferric hydroxysulfate and the oxidation of the ferrous chloride to ferric hydroxychloride take place mainly according to the following reaction equations (III and IV):

4FeSO₄ + 2H₂O + O₂ = 4Fe(OH)SO₄ (III)

4FeCl₂ + 2H₂O + O₂ = 4Fe(OH)Cl₂ (IV)

A situation has been discussed above in which a sulfate- and/or chloride-based ferric salt has either been taken directly from an industrial process or been produced by oxidation. The oxidant used may be any oxidant that oxidizes inorganic salts, such as oxygen, nitric acid, chlorine, hydrogen peroxide, sodium chlorate and/or air. Oxygen has proven to be an especially usable oxidant in the process according to the invention. The oxidation itself may be carried out in either one or a plurality of steps in order to obtain an optimal oxidation result.

According to another embodiment of the invention, differing from those described above, a sulfate- and/or chloride-based ferric salt is produced in step a) of the process by reacting ferric hydroxide with sulfuric acid and/or hydrochloric acid. In this case, according to one embodiment, the ferric hydroxide and the hydrochloric and/or sulfuric acid are contacted in an aqueous solution and are heated preferably to a temperature of 40-140°C, most preferably to a temperature of 60-100°C. Under these conditions the ferric hydroxide neutralizes and dissolves to ferric sulfate and/or ferric chloride mainly according to the following reaction equations (V, VI and VII):

2Fe(OH)₃ + 3H₂SO₄ = Fe₂(SO₄)₃ + 6H₂O (V)

Fe(OH)₃ + 3HCl = FeCl₃ + 3 H₂O (VI)

3Fe(OH)₃ + 2H₂SO₄ + 5HCl = FeCl₃ + Fe₂(SO₄)₂Cl₂ + 9H₂O (VII)

In step b) of the process according to the invention, an acidic aqueous solution is produced which comprises either sulfate and ferric ions, or sulfate, chloride and ferric ions. On the basis of the foregoing it is clear that the solution for the preparation of raw materials in step a) can be used as such, provided that the solution is suitable for the hydrolysis of step c). A second alternative is to modify the preparation solution of step a), for example, by concentration, dilution, acidification with for example sulfiric acid, or neutralization. Regardless of how the acidic aqueous solution of step b) is produced, it has been found preferable for the molar ratio SO₄/Fe(III) to be in the order of 0.6-1.7.

When necessary, the sulfate concentration of the acidic aqueous solution of step b) can be adjusted by adding a sulfate salt such as magnesium sulfate and/or sodium sulfate. When a chloride-based ferric salt is present in the acidic aqueous solution of step b), the sulfate content must be so high that a substantial proportion of the chloride-based ferric salt is converted in hydrolysis to ferric hydroxysulfate or its derivative. In general, the composition of the acid aqueous solution of step b) may vary greatly depending on whether the process according to the invention is used for preparing ferric hydroxysulfate or some other sulfate- and hydroxide-based ferric compound, such as sodium jarosite. The main idea is, however, that the sulfate- and/or chloride-based ferric salt hydrolyzes to a solid hydroxysulfate compound of trivalent iron, whereupon the impurities present in the initial materials are left in the acidic aqueous solution and the product is recovered in pure form. One of the most important advantages of the invention is that in principle hardly any sulfuric acid needs to be added to the hydrolysis step. Ferric salts are as such acid salts in an aqueous solution, one idea of the invention being that only a certain heating for a certain time is required for the hydrolysis.

In step c) of the process according to the invention, the hydrolysis of the acidic aqueous solution of step b), which contains either sulfate and ferric ions, or sulfate, chloride and ferric ions, is carried out by heating, whereupon a sulfate- and hydroxide-based ferric salt is precipitated The hydrolysis time is 2-12 h and the temperature is 60-220°C. These conditions are thus suitable for producing both ferric hydroxysulfate and various types of sulfate- and hydroxide-containing ferric compounds by hydrolysis. In the hydrolysis it is preferable to heat for 3-8 h, in which case the pressure may be, for example, 3-15 bar, preferably 5-10 bar.

Up to now the discussion has been of those characteristics of the process according to the invention which are common to the preparation of all the sulfate- and hydroxide-based ferric compounds referred to in the invention. Below, the special features of those embodiments of the invention are discussed by which ferric hydroxysulfate on one hand and sodium jarosite on the other hand are prepared. These are the most important compounds prepared by the process according to the invention.

According to one embodiment of the invention, the procedures of steps a) - c) are performed without an alkali metal, in which case a pure and solid ferric hydroxysulfate is recovered in step d). In the production of ferric hydroxysulfate by the process according to the invention it has been found preferable to adjust the final molar ratio SO₄/Fe(III) in the acidic aqueous solution of step b) to approximately 1.34-1.70, more preferably approximately 1.34-1.50, and most preferably approximately 1.34-1.40. It should be pointed out that the ratio 1.34 corresponds to a situation in which the initial material of the hydrolysis step b) is a mere aqueous solution of polyferric sulfate.

One of the greatest advantages of the ferric hydroxysulfate embodiment of the invention is that in principle no sulfuric acid needs to be added to the hydrolysis step. Since ferric sulfate is as such an acid salt which in an aqueous solution produces a pH value of 1.75, the pH of the acidic aqueous solution of step b) of the process according to the invention is preferably within the range 1.14-2.00, and preferably 1.70-1.80, in which case it is preferably maintained at that value during the hydrolysis of step c) of the process. If sulfuric acid is present in the hydrolysis of point c), its concentration will not exceed 60 g/l and is preferably below approximately 30 g/l.

As already stated, the temperature in the hydrolysis step c) is within the range 150-220°C, if ferric hydroxysulfate is prepared. A preferred hydrolysis temperature for step c) of the ferric hydroxysulfate embodiment of the invention is 170-200°C, and the most preferred temperature is 170-180°C. The respective preferable reaction time of this embodiment is 5-8 h and the most preferable reaction time is 6-7 h.

One very important viewpoint of the invention is that the hydrolysis conditions according to the invention may be applied to the initial solution, i.e. the acidic aqueous solution of step b), which contains very different amounts of ferric iron. Considering commercial production it is, of course, preferable to use maximally high iron amounts, in which case the consumption of other chemicals and energy, in proportion to the amount of usable sulfate- and hydroxide-based ferric compound produced, will be much lower. When the process according to the invention is used for the production of pure ferric hydroxysulfate, the iron concentration of the acidic aqueous solution of step b) can be adjusted to 10-200 g/l, preferably approximately 30-200 g/l, and most preferably approximately 100-200 g/l. An especially advantageous iron concentration is approximately 180 g/l.

In the foregoing there have been presented all those characteristics of the process according to the invention which are common in the preparation of all sulfate- and hydroxide-based ferric compounds and those characteristics which are advantageous in particular in the preparation of ferric hydroxysulfate. Even though the last-mentioned characteristics are especially advantageous in the preparation of ferric hydroxysulfate, they can, of course. also be used in the preparation of other sulfate- and hydroxide-based ferric compounds.

According to another important embodiment of the present invention, a sulfate- and hydroxide-based ferric compound, sodium jarosite, is prepared, having approximately the formula NaFe₃(OH)₆(SO₄)₂, but this may vary, cf. examples. In the process there is produced in step b) an acidic aqueous solution which, in addition to the above-mentioned sulfate, ferric and possibly chloride ions, also comprises a water-soluble sodium compound, in which case in step c) there is formed through hydrolysis a solid sodium jarosite free of heavy metals etc. In this case, according to one embodiment, the acidic aqueous solution of step b) may be neutralized partly with a base before the heating in step c). Most suitable for this purpose is a sodium-containing base, e.g. sodium hydroxide or sodium carbonate.

In the preparation of sodium jarosite it is also possible to combine the procedures of steps a) and b) of the process by producing a sulfate- and/or chloride-based ferric salt in situ in an acidic aqueous solution of a sodium salt. In this case, for example, the oxidation and the hydrolysis may be carried out either simultaneously or as successive steps for the treatment of the same solution.

According to one modification of the sodium jarosite embodiment of the process according to the invention, the acidic aqueous solution of step b) may be produced by dissolving in water a sodium compound selected from among the following: sodium chloride, sodium hydroxide, sodium sulfate, and sodium carbonate. In the sodium jarosite embodiment of the present process, the various components are preferably added so that the molar ratio Na/Fe(III) in the acidic aqueous solution of step b) of the process is adjusted to a value which is in the order of 0.3-1.0. It is also preferable to adjust, by means of a base, the molar ratio OH/Fe(III) in the acidic aqueous solution of step b) to a value which is in the order of 0.8-1.3.

As stated above in connection with the preparation of ferric hydroxysulfate, one very important aspect of the invention is that the hydrolysis conditions according to the invention may be applied to the initial solution, i.e. the acidic aqueous solution of step b), which contains varying amounts of ferric iron. The concentration of iron in the acidic aqueous solution of step b) may in the sodium jarosite embodiment be adjusted to a value of 10-200 g/l.

When sodium jarosite is prepared by the process according to the invention, the temperature in the hydrolysis step c) is preferably approximately 120-140°C, the most preferred temperature being approximately 130-140°C. A preferred reaction time is approximately 3-6 h, and the most preferred reaction time is 4-5 h.

Four figures and 50 examples are presented below to illustrate the invention.

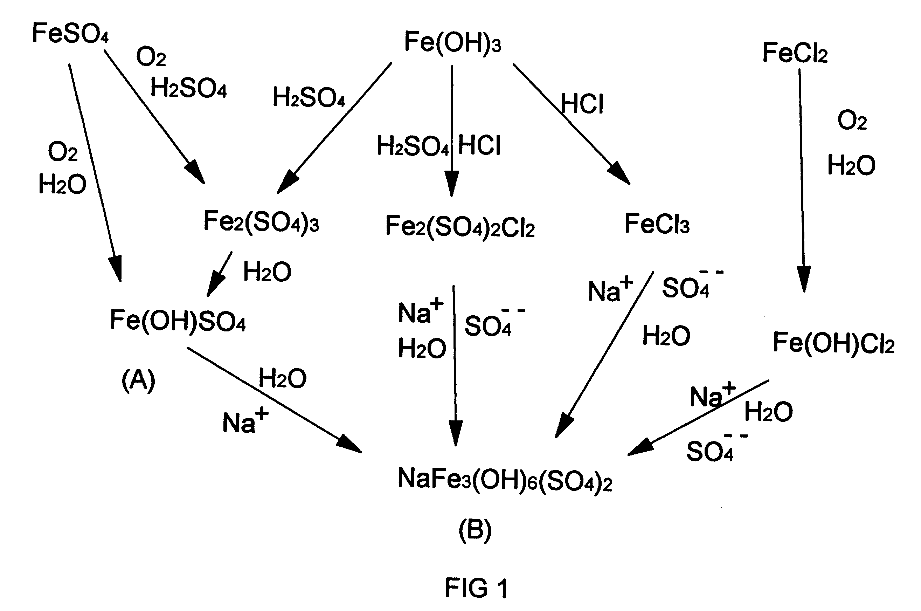

- Figure 1: depicts variants of the process according to the invention for the preparation of iron hydroxysulfate (A) and sodium jarosite (B),
- Figure 2: depicts a schematic diagram of the iron hydroxysulfate process,
- Figure 3: depicts a schematic diagram of the sodium jarosite process, and
- Figure 4: depicts the final pH of a hydrolysis solution as a function of the hydrolysis time.

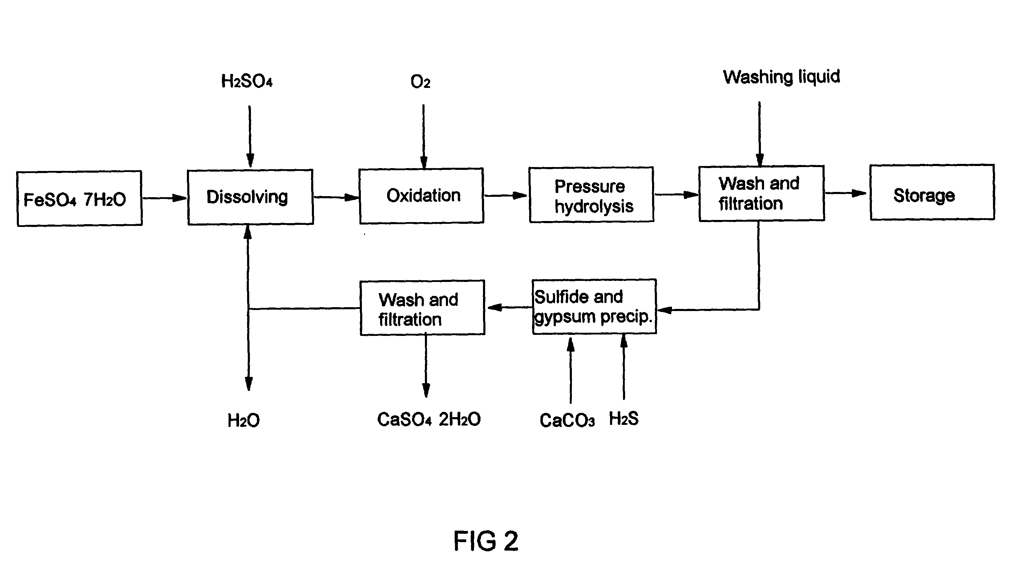

Figure 2 is a block diagram of the process according to one embodiment of the invention for the preparation of ferric hydroxysulfate by hydrolyzing ferrous sulfate FeSO₄ · 7H₂O. The ferrous sulfate is fed, together with hydrogen and concentrated sulfuric acid, into a dissolving unit, from which it is transferred to an oxidation reactor having a pressure of 7 bar and a temperature of 120-130°C. After the oxidation, pressure hydrolysis takes place at a temperature of 170°C and a pressure of 7 bar. The hydrolysis time is in this case approximately 5-7 h. Subsequently the ferric hydroxysulfate precipitated in the hydrolysis is washed and filtered. A washing liquid is added to the washing step, and for example a pressure filter can be used. The obtained product is stored, and the remaining reaction liquid is neutralized with calcium carbonate, and its metallic and other impurities are precipitated with hydrogen sulfide. The gypsum and sulfide precipitates from the neutralization and sulfidization respectively are separated, and the remaining water is returned to the process or directed to a drain.

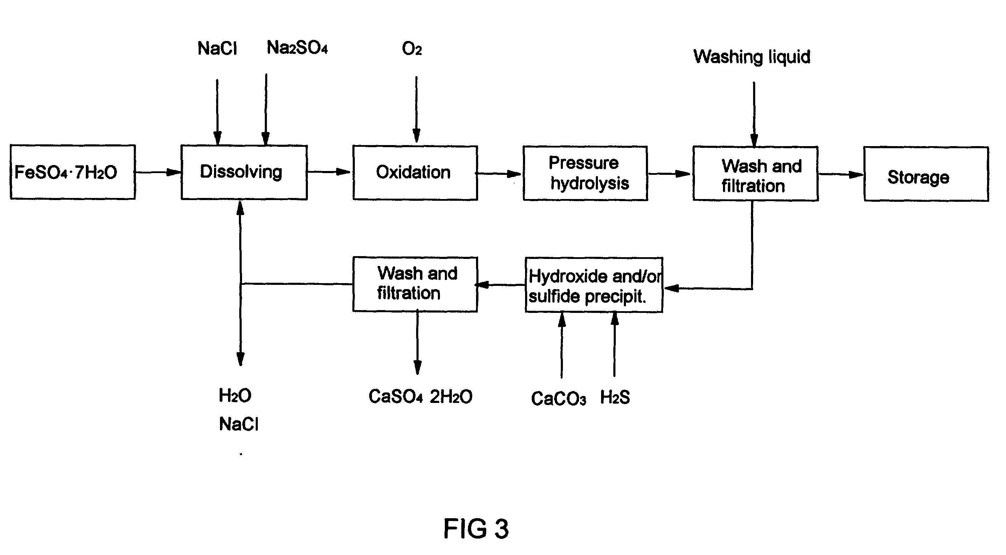

Figure 3 depicts schematically a process for the preparation of sodium jarosite by hydrolyzing ferrous sulfate FeSO₄ · 2H₂O in accordance with one embodiment of the invention. The ferrous sulfate, together with water, sodium chloride and sodium sulfate, is fed into a dissolVing unit, from which it is directed to an oxidation reactor having a pressure of 7 bar and a temperature of 120-130°C. The hydrolysis time is approximately 5 h. Thereafter the precipitated sodium jarosite is washed and filtered. Washing liquid is added to the washing step, and for example a pressure filter is used in that step. The precipitated product is stored, and the remaining washing liquid is neutralized with calcium carbonate. and the impurity metals are precipitated with hydrogen sulfide. The gypsum and the precipitated sulfides are separated, and the remaining water is returned to the process or directed to a drain.

### Examples 1-16 (preparation of ferric hydroxysulfate)

The experiments were performed in an enameled 2-liter autoclave equipped with a stirrer. The autoclave was capable of being both heated and cooled, and it was equipped with a pressure meter.

In the examples, the solution was fed into the autoclave and the autoclave was closed. Most of the examples were performed by using polyferric sulfate as the initial material. When ferrous sulfate was used as the initial material, the oxygen required for the oxidation was fed in as small bubbles to the bottom of the reaction vessel. The oxidation was carried out at a temperature of 120-130°C, and after the oxidation the autoclave was heated to the desired pressure and temperature for hydrolysis. The heating times of the reaction solution are not included in the oxidation and hydrolysis times reported.

After the experiment, the precipitate was separated from the solution and was analyzed for iron and sulfur. The precipitate was identified by means of X-ray diffraction. The solution was analyzed for iron, pH value, and sulfuric acid.

The results were as follows.

### Effect of Fe concentration and temperature

Ferric hydroxysulfate can be produced even from very strong solutions of ferric sulfate by pressure hydrolysis. Ferric hydroxysulfate precipitated out even from solutions which contained iron approximately 170 g/l, as is shown in Table 1.

**Table 1**

| Ex. | Fe (g/l) | H₂SO₄ (g/l) | pH | SO₄/Fe | T(°C) | p (bar) | t (h) | Yield (%) | S (%) | Fe (%) |
|---|---|---|---|---|---|---|---|---|---|---|
| 1 | 45 | 30 | 1.65 | | 157 | 8 | 3 | 0 | - | - |
| 2 | 45 | 90 | 1.16 | | 195 | 14 | 3 | 36 | 21 | 32 |
| 3 | 90 | 30 | - | | 157 | 10 | 3 | 0 | - | - |
| 4 | 170 | 100 | 1.14 | 1.68 | 150 | 3.5 | 3 | 0 | - | - |
| 5 | 170 | 100 | 1.14 | 1.68 | 150 | 7.8 | 3 | 0 | - | - |
| 6 | 170 | 100 | 1.14 | 1.68 | 170 | 6.5 | 3 | 36 | 20 | 3 1 |
| 7 | 170 | 100 | 1.14 | 1.68 | 170 | 15 | 3 | 28 | 21 | 31 |

According to the results, pressure hydrolysis does not produce ferric hydroxysulfate at temperatures below 150°C. Even an increase of pressure (in Examples 4 and 5) does not help if the temperature is too low, and does not improve the result even when the temperature is within the correct range (Examples 6 and 7). The obtained final product was ferric hydroxysulfate, which was confirmed by chemical analysis and X-ray diffraction.

### Effect of H₂SO₄

The effect of the adding of sufuric acid on the precipitate yield and on the composition of the product is shown in Table 2. The experiments were performed by using as the initial material for the hydrolysis a polyferric sulfate in which the SO₄/Fe ratio was 1.34.

**Table 2**

| Ex. | Fe (g/l) | H₂SO₄ (g/l) | pH | SO₄/Fe | T(°C) | p (bar) | t (h) | Yield (%) | S (%) | Fe (%) |
|---|---|---|---|---|---|---|---|---|---|---|
| 8 | 170 | 100 | 1.14 | 1.68 | 170 | 6.5 | 3 | 36 | 20 | 31 |
| 9 | 172 | 60 | 1.34 | 1.55 | 170 | 5.8 | 3 | 56 | 21 | 31 |
| 10 | 179 | 20 | 1.62 | 1.42 | 170 | 6.7 | 3 | 44 | 20 | 32 |
| 11 | 182 | 0 | 1.75 | 1.34 | 170 | 7.0 | 3 | 45 | 20 | 32 |

Reducing the amount of sulfuric acid added does not affect the precipitate yield or the quality of the product. The small scatter of the results may be due to practical problems in the experiment. According to X-ray diffraction, the products obtained were 2FeSO₄(OH) or Fe₂S₂O₉·H₂O, or a mixture of thereof. Thus a high concentration of iron and sulfate in the solution prevents the formation of hematite, and a high operating temperature prevents the formation of jarosite.

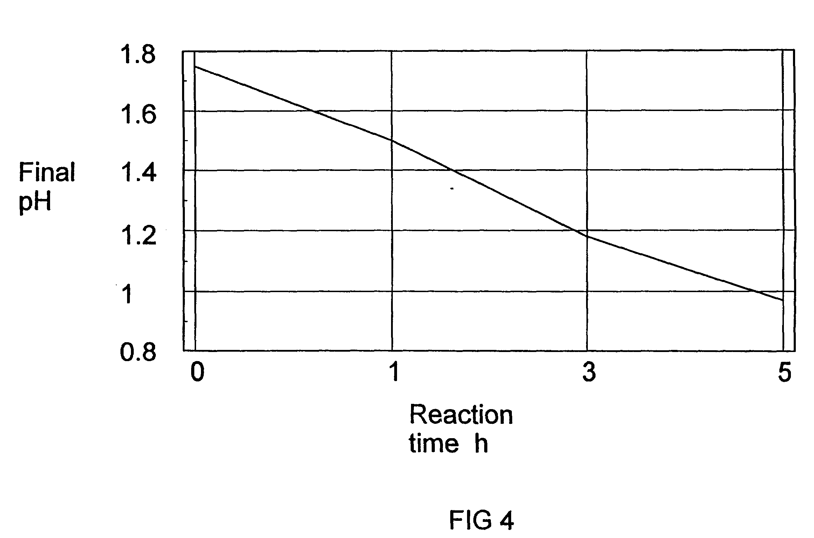

The formed sulfuric acid amount (at least approx. 0.5 mol/mol product) must be neutralized when the mother liquor is separated from the process. The sulfuric acid forming in the hydrolysis reaction is presented as a function of the reaction time in Figure 4. The figure shows, as a function of the hydrolysis time, the final pH value of the hydrolysis solution. The iron concentration was 180 g/l, the temperature was 170°C, the pressure was 7 bar, and no sulfuric acid was added to the ferric sulfate before the hydrolysis. In the figure, a lengthening of the reaction time increased the yield of ferric hydroxysulfate, in which case more sulfuric acid was released into the solution. This is shown as a lowering of the pH value as a function of the hydrolysis time.

### Effect of reaction time

A lengthening of the reaction time increased the amount of precipitate formed in pressure hydrolysis, as shown in Table 3. A high yield (94%) is also achieved by an elevation of the temperature (Example 16). Table 3 shows the effects of the reaction time and the reaction temperature on the yield of ferric hydroxysulfate. In the experiment, no sulfuric acid was added to the ferric sulfate initial material.

**Table 3**

| Ex. | Fe (g/l) | pH | SO₄/Fe (g/l) | T(°C) | p (bar) | t (h) | Yield (%) | S (%) | Fe (%) |
|---|---|---|---|---|---|---|---|---|---|
| 12 | 182 | 1.75 | 1.34 | 170 | 7.0 | 1 | 18 | 15 | 34 |
| 13 | 182 | 1.75 | 1.34 | 170 | 7.0 | 3 | 44 | 20 | 32 |
| 14 | 182 | 1.75 | 1.34 | 170 | 7.0 | 5 | 86 | 19 | 32 |
| 15 | 182 | 1.75 | 1.34 | 170 | 7.0 | 7 | 94 | 19 | 31 |
| 16 | 182 | 1.75 | 1.34 | 180 | 9.0 | 5 | 94 | 19 | 32 |

A high recovery of ferric iron is achieved by lengthening the reaction time. A second alternative is to increase the temperature. With short reaction times the reaction does not reach an equilibrium, a fact shown in the chemical analysis of the product One hour's run does not lead to pure ferric hydroxysulfate, a fact which can be concluded from the low sulfur content in the precipitate.

### Properties of product

The ferric hydroxysulfate obtained by the process according to the invention had very low concentrations of heavy metals. According to the chemical analysis, the metals remained substantially in the mother liquor, as shown in Table 4. The weight of the initial solution was, in the experiment concerned, 1490 g, and after the hydrolysis 470 g of precipitate and 748 g of filtrate were obtained. The precipitate yield was 86%.

**Table 4**

| Element | Filtrate | Precipitate |
|---|---|---|
| Pb | <0.0009% | <0.002% |
| Cd | 0.000005% | <0.00001% |
| Cu | 0.00029% | <0.0007% |
| Cr | 0.00092% | <0.002% |
| Co | 0.0076% | 0.0022% |
| Ni | 0.0054% | <0.002% |
| Zn | 0.030% | 0.0053% |

The concentrations of several substances analyzed from the precipitate were below the detection limits of the analysis method (flame-AAS). The precipitate contained only approx. 13% of the original cobalt amount and only approx. 8% of the original zinc amount. When the precipitate is dissolved and a 12% iron solution is prepared from it, the metal content in the liquid is diluted to 1/3.

The product obtained was soluble in sulfuric acid, but the dissolving was time-consuming. In the first experiments, a solution which contained iron 11.4% was achieved. The precipitate was also soluble in hydrochloric acid, whereby a 15% solution was achieved. The pH of the solution was 1.43, which is close to the pH value 1.42 of commercial ferric flocculants. The concentration of free acid in the 15% solution was 2.

### Examples 17-32 (preparation of sodium jarosite)

A first set of experiments were performed in an enameled 40-liter autoclave equipped with a stirrer. The autoclave was capable of being both heated and cooled, and it was equipped with a pressure meter.

A second set of experiments were performed in three enameled 8000-liter reactors which were coupled to each other to produce a continuous reaction line. The reactors were heatable, and they each had a pressure gauge.

In the first set of experiments, the solution was fed into the autoclave and the autoclave was closed. When ferrous sulfate was used as the initial material, the required oxygen was fed in as small bubbles. Oxidation was carried out at a temperature of 120-130°C, and after the oxidation the autoclave was heated to the desired pressure and temperature for hydrolysis. The hydrolysis and oxidation times indicated do not include the times taken by the heating of the reaction solution.

After the experiment, the precipitate was separated from the solution, and the iron and impurities were analyzed. The precipitate was identified by X-ray diffraction. The following results were obtained.

The said impurities were cadmium, chromium, cobalt, copper, lead, manganese, nickel, vanadium, and zinc.

In the second set of experiments, the solution was fed continuously to the reactor line. Most of the experiments were performed by using various pickling solution mixtures based on hydrochloric acid and sulfuric acid. Experiments were also performed by using ferrous sulfate as the initial material. As in the first set of experiments, in these also the oxygen was fed in as small bubbles.

Oxidation was carried out at a temperature of 120-130°C, and after the oxidation the autoclave was heated to the desired pressure and temperature for hydrolysis. The oxidation and hydrolysis times indicated do not include the times taken by the heating of the reaction solution.

After the experiments, the precipitate was separated from the solution, and it was analyzed for iron and impurities. The precipitate was identified by using X-ray diffraction. The solution was analyzed for iron, pH, and impurities. The results are given below.

### Effect of temperature

Temperature is an important parameter. Table 5 shows the results of Experiments 17-22, in which the temperature ranged from 80-140°C.

**Table 5**

| Results of Experiments 17-22 | | | | | | | |
|---|---|---|---|---|---|---|---|
| Exp. | Fe | Initial pH | T (°C) | t (h) | Yield (%) | Final pH | Na salt |
| 17 | 7.0 | 2.48 | 100 | 5 | 78 | 0.50 | Na₂SO₄ |
| 18 | 7.0 | 2.48 | 120 | 5 | 90 | 0.22 | Na₂SO₄ |
| 19 | 7.0 | 2.48 | 140 | 5 | 96 | 0.10 | Na₂SO₄ |
| 20 | 7.3 | 2.45 | 80 | 3 | 82 | 1.24 | Na₂CO₃ |
| 21 | 7.4 | 2.40 | 100 | 3 | 94 | 1.07 | Na₂CO₃ |
| 22 | 7.4 | 2.40 | 120 | 3 | 96 | 1.03 | Na₂CO₃ |

According to the results, a sodium jarosite yield over 90% is not obtained in the hydrolysis before the temperature reaches 100°C. The best yield was obtained within the temperature range 120-140°C. The yield was better when sodium carbonate was used instead of sodium sulfate, but the pH was higher when sodium carbonate was used.

### Effect of Na/Fe ratio

The effect of the Na/Fe ratio on the yield of the product is shown in Table 6. The experiments were performed by using ferrous sulfate and oxygen as the initial materials for the hydrolysis.

**Table 6**

| Results of experiments 23-28 | | | | | | |
|---|---|---|---|---|---|---|
| Exp. | Fe:Na | T (°C) | t (h) | Final pH | Yield (%) | Na salt |
| 23 | 3:1.5 | 110 | 3 | 0.24 | 68 | NaCl |
| 24 | 3:2.0 | 110 | 3 | 0.02 | 71 | NaCI |
| 25 | 3:1.5 | 110 | 5 | 0.20 | 84 | Na₂SO₄ |
| 26 | 3:2.0 | 110 | 5 | 0.34 | 90 | Na₂SO₄ |
| 27 | 3:1.5 | 110 | 4 | 0.58 | 88 | NaOH |
| 28 | 3:2.0 | 110 | 4 | 0.70 | 92 | NaOH |

The best yield was obtained with an iron/sodium ratio of 3:2.0. This effect was visible with all the sodium salts.

### Effects of different sodium salts

Table 7 shows the effects of the different sodium salts on the product yield. The experiments were performed using ferrous sulfate and oxygen as the initial materials for the hydrolysis.

**Table 7**

| Exp. | Fe:Na | T (°C) | t (h) | Final pH | Yield (%) | Na salt |
|---|---|---|---|---|---|---|
| 29 | 3:2 | 110 | 5 | 0.09 | 75 | NaCl |
| 30 | 3:2 | 110 | 5 | 0.35 | 89 | Na₂SO₄ |
| 31 | 3:2 | 110 | 5 | 0.7 | 92 | NaOH |
| 32 | 3:2 | 110 | 5 | 1.0 | 95 | Na₂CO₃ |

The best yield was obtained when sodium carbonate was used. The highest pH values were obtained when sodium carbonate or sodium hydroxide was used. This is, of course, a consequence of the hydroxide present in these bases.

When sodium sulfate was used, a better yield was obtained than when sodium chloride was used. This is explained by the fact that, when sodium sulfate is used, the sulfate concentration is higher. This effect was examined in the following experiments.

### Effect of sulfate concentration

The effect of the sulfate concentration on the product yield is shown in Table 8. These experiments were performed by using ferrous sulfate, ferrous chloride and oxygen as the initial materials for the hydrolysis.

**Table 8**

| Results of experiments 33-35 | | | | |
|---|---|---|---|---|
| Exp. | SO₄:Fe | T (°C) | t (h) | Yield (%) |
| 33 | 4:3 | 110 | 5 | 91 |
| 34 | 3:3 | 110 | 5 | 75 |
| 35 | 2:3 | 110 | 5 | 58 |

The highest yield was obtained with an SO₄:Fe ratio of 4:3. This demonstrates the importance of the sulfate concentration.

### Effect of temperature on hydrolysis

The effect of temperature on the hydrolysis is illustrated in Table 9.

**Table 9**

| Results of experiments 36-41 | | | |
|---|---|---|---|
| Exp. | T (°C) | t (h) | OH/Fe |
| 36 | 100 | 5 | 0.56 |
| 37 | 110 | 4 | 0.58 |
| 38 | 110 | 5 | 0.68 |
| 39 | 110 | 6 | 0.88 |
| 40 | 120 | 5 | 0.80 |
| 41 | 140 | 5 | 0.92 |

The OH/Fe ratio increases at high temperatures. When the temperature increases from 100°C to 140°C, the OH/Fe ratio increases by 64%, from 0.56 to 0.92.

The most preferred values of the OH/Fe ratio are between 0.80 and 1.0. An OH/Fe ratio this high yields a very low final pH. A mixture formed of sodium jarosite and a solution having a very low pH yields a very low impurity level in the sodium jarosite product.

### Effect of reaction time

Lengthening of the reaction time increased the amount of precipitate; this is clearly seen in Table 10.

**Table 10**

| Results of Experiments 42-45 | | | | | | | |
|---|---|---|---|---|---|---|---|
| Exp. | Yield% | | | | | T °C | Fe:Na |
| | 1h | 2h | 3h | 4h | 5h | | |
| 42 | 60 | 71 | 77 | 79 | 84 | 110 | 3:1.5 |
| 43 | 43 | 79 | 83 | 87 | 94 | 110 | 3:2 |
| 44 | 31 | 68 | 82 | 85 | 87 | 110 | 3:2 |
| 45 | 55 | 85 | 90 | 92 | 92 | 110 | 3:2 |

Table 10 shows the effect of the reaction time on the yield of sodium jarosite. A high yield of sodium jarosite is obtained by lengthening the reaction time.

### Properties of product

The sodium jarosite prepared by the process according to the invention contained very small amounts of heavy metals. On the basis of the chemical analysis, the metals substantially remained in the mother liquor, as can be seen in Table 11, which shows the distribution of the metals.

**Table 11**

| Distribution of heavy metals | | | | | | | | | | |
|---|---|---|---|---|---|---|---|---|---|---|
| Exp. | | Pb | Co | Cr | Cu | Mg | Mn | Ni | V | Zn |
| 46 | mother liq. | 0% | 100% | 95% | 39% | 99% | 99% | 100% | 48% | 99% |
| | product | 100% | 0% | 5% | 61% | 1% | 1% | 0% | 52% | 1% |
| 47 | mother liq. | 34% | 100% | 96% | 43% | 99% | 99% | 100% | 34% | 99% |
| | product | 66% | 0% | 4% | 55% | 1% | 1% | 0% | 66% | 1% |
| 48 | mother liq. | 100% | 100% | 40% | 97% | 100% | 99% | 100% | 32% | 97% |
| | product | 0% | 0% | 60% | 3% | 0% | 1% | 0% | 68% | 3% |
| 49 | mother liq. | 100% | 100% | 100% | 50% | 99% | 99% | 100% | 40% | 98% |
| | product | 0% | 0% | 0% | 50% | 1% | 1% | 0% | 60% | 2% |
| 50 | mother liq. | 100% | 100% | 100% | 33% | 99% | 99% | 100% | 41% | 96% |
| | product | 0% | 0% | 0% | 67% | 1% | 1% | 0% | 59% | 4% |

Cobalt, magnesium, manganese, nickel and zinc can be separated from the iron. These metals remain in an amount of 96-100% in the mother liquor. Lead, chromium and copper are more sensitive to changes in the chemical conditions. This sets limitations on the concentrations of these heavy metals when they are being separated from iron. 32-48% of the vanadium remains in the mother liquor.

### Preparation from ferrous sulfate

Ferrous sulfate can be used as the initial material in the preparation of sodium jarosite. By the process according to the invention, a very pure iron compound is obtained in which the concentration of heavy metals is low. Table 12 shows the concentrations of heavy metals in the initial material and in the product, and Table 13 gives the same concentrations per one kg of iron.

**Table 12**

| Heavy metal concentrations (ppm) in the ferrous sulfate initial material and in the sodium jarosite product. | | | | | | | | | | |
|---|---|---|---|---|---|---|---|---|---|---|
| | Fe | Pb | Co | Cr | Cu | Mg | Mn | Ni | V | Zn |
| Ferrous sulfate | 18% | 1 | 25 | 21 | 2 | 4030 | 543 | 39 | 9 | 146 |
| Sodium jarosite | 35% | <1 | <1 | <1 | 1 | 33 | 4 | <1 | 8 | 7 |

**Table 13**

| Heavy metal concentrations (ppm) / kg iron | | | | | | | | | |
|---|---|---|---|---|---|---|---|---|---|
| | Pb | Co | Cr | Cu | Mg | Mn | Ni | V | Zn |
| Ferrous sulfate | 6 | 139 | 117 | 11 | 22389 | 3017 | 217 | 50 | 811 |
| Sodium jarosite | <3 | <3 | <3 | 3 | 94 | 11 | <3 | 23 | 20 |

With respect to heavy metals, sodium jarosite is thus a much better raw material for the water chemical than is ferrous sulfate. The relative concentrations of heavy metals in sodium jarosite are very low.

### Composition of sodium jarosite

The product of the process according to the invention is a sodium jarosite the structural formula of which is NaFe₃(OH)₆(SO₄)₂. It was shown by the experiments that the structural formula varies and may deviate from the above formula. The product is a mixture of hydronium jarosite ((H₃O)Fe₃(OH)₆(SO₄)₂) and sodium jarosite (NaFe₃(OH)₆(SO₄)₂), the average composition being Na_{0.8}(H₃O)_{0.2}Fe₃(OH)₆(SO₄)₂. This mixture varies within the following limits: Na_{0.6}(H₃O)_{0.4}Fe₃(OH)₆(SO₄)₂, NaFe₃(OH)₆(SO₄)₂.

## Claims

1. A process for the preparation of a sulfate- and hydroxide-containing ferric compound, which is selected from ferric hydroxysulfate and sodium jarosite, **characterized** in that it comprises the steps of:
a) preparing a sulfate- and/or chloride-based ferric salt soluble in an acidic aqueous solution
a1) by recovering a sulfate- and/or chloride-based ferric salt obtained as a product of an industrial process, soluble in an acidic aqueous solution,
a2) by oxidizing ferrous sulfate FeSO₄ in a sulfuric acid solution,
a3) by sulfating ferric hydroxide Fe(OH)₃ with sulfuric acid,
a4) by chlorosulfating ferric hydroxide Fe(OH)₃ with sulfuric acid and hydrochloric acid,
a5) by chlorinating ferric hydroxide Fe(OH)₃ with hydrochloric acid, or
a6) by oxidizing ferrous chloride FeCl₂ in a hydrochloric acid solution,
provided that, when sodium jarosite is prepared, oxygen O₂ is used for the oxidation,
b) preparing an acidic aqueous solution of said sulfate- and/or chloride-based ferric salt,
c) maintaining said acidic aqueous solution in the presence of sulfate ions for 2-12 h at a temperature of 150-220°C, if ferric hydroxysulfate is prepared, or for 2-12 h at a temperature of 120-140°C, if sodium jarosite is prepared, in order to produce a precipitate of said sulfate- and hydroxide-containing ferric compound by hydrolysis, and
d) separating said sulfate- and hydroxide-containing ferric compound, which is selected from ferric hydroxysulfate and sodium jarosite, in a pure and solid form from said acidic aqueous solution.

2. A process according to Claim 1, **characterized** in that the sulfate- and/or chloride-based ferric salt is obtained in step a) by oxidizing ferrous sulfate FeSO₄ and/or ferrous chloride FeCl₂.

3. A process according to Claim 2, **characterized** in that the ferrous sulfate Fe-SO₄ is oxidized in step a2) with sulfuric acid and an oxidant by contacting them with each other in an aqueous solution at a temperature of 80-160°C and a pressure of 3-10 bar, preferably at a temperature of 120-130°C and a pressure of 5-7 bar, whereby ferric sulfate Fe₂(SO₄)₃ is produced.

4. A process according to Claim 3, **characterized** in that in step a) sulfuric acid and ferrous sulfate FeSO₄ are used in such amounts that the molar ratio SO₄/Fe(II) will be 1.10-1.50.

5. A process according to Claim 1 or 2, **characterized** in that steps a) - c) are performed substantially simultaneously.

6. A process according to Claim 2 or 5, **characterized** in that the oxidation of step a) and the hydrolysis of step c) are combined by causing the ferrous sulfate, or the ferrous sulfate and ferrous chloride, to react with water and an oxidant for 2-12 h at a temperature of 60-220°C, if ferric hydroxysulfate is prepared, and 120-140°C, if sodium jarosite is prepared.

7. A process according to any of Claims 2-6, **characterized** in that the ferrous sulfate or ferrous chloride is introduced into step a2) or a6) respectively in the form of a pickling acid based on sulfuric acid or hydrochloric acid.

8. A process according to any of Claims 2-7, **characterized** in that the oxidant used in step a2) or a6) is oxygen, nitric acid, chlorine, hydrogen peroxide, sodium chlorate, and/or air, preferably oxygen.

9. A process according to Claim 1, **characterized** in that the sulfate- and/or chloride-based ferric salt is obtained in steps a3) - a5) by reacting ferric hydroxide with sulfuric acid and/or hydrochloric acid.

10. A process according to Claim 9, **characterized** in that ferric hydroxide is reacted in step a4) with sulfuric acid and/or hydrochloric acid by contacting them with each other in an aqueous solution at a temperature of 40-140°C, preferably at a temperature of 60-100°C.

11. A process according to any of the above claims, **characterized** in that in step b) the molar ratio SO₄/Fe(III) in the acidic aqueous solution is adjusted to a value in the order of 0.6-1.7.

12. A process according to any of the above claims, **characterized** in that the concentration of sulfate in the acidic aqueous solution of step b) is adjusted by adding magnesium sulfate and/or sodium sulfate.

13. A process according to any of the above claims, **characterized** in that in step b) magnesium sulfate and/or sodium sulfate is added in such an amount that a substantial proportion of the chloride-based ferric salt is, in the hydrolysis of step c), transformed into a sulfate- and hydroxide-based ferric compound.

14. A process according to any of the above claims, **characterized** in that the pH of the acidic aqueous solution of step b) is adjusted to 1.14-2.00 preferably 1.70-1.80, and is preferably maintained at that value throughout the procedure of step c).

15. A process according to any of the above claims, **characterized** in that the heating in step c) is for 3-8 h.

16. A process according to any of the above claims, **characterized** in that in step c) the heating is at a pressure of 3-15 bar, preferably at a pressure of 5-10 bar.

17. A process according to any of the above claims, **characterized** in that the procedures of steps a) - c) are performed without an alkali metal, in which case a pure and solid ferric hydroxysulfate is recovered from step d).

18. A process according to Claim 17, **characterized** in that in step b) the molar ratio SO₄/Fe(III) is 1.34-1.50, preferably 1.34-1.40.

19. A process according to Claim 17 or 18, **characterized** in that in step c) the acidic aqueous solution is maintained at a temperature of 170-200°C, preferably at a temperature of 170-180°C.

20. A process according to any of Claims 17-19, **characterized** in that the concentration of iron in the acidic aqueous solution of step b) is adjusted to a value of 30-200 g/l, preferably to a value of 100-200 g/l.

21. A process according to any of Claims 1-15, **characterized** in that in step b) an acidic aqueous solution is prepared which, in addition to sulfate, ferric and possibly chloride ions, also comprises a water-soluble sodium compound, in which case in step c) there is formed a pure and solid sulfate- and hydroxide-based ferric compound, which is sodium jarosite.

22. A process according to Claim 21, **characterized** in that in step b) the acidic aqueous solution is neutralized partly with a base before the heating of step c).

23. A process according to Claim 22, **characterized** in that in step b) the neutralization is carried out partly with a base which is sodium hydroxide or sodium carbonate.

24. A process according to any of Claims 21-23, **characterized** in that the procedures of steps a) and b) are combined by preparing a sulfate- and/or chloride-based ferric salt in situ in an acidic aqueous solution of a sodium salt.

25. A process according to any of Claims 21-24, **characterized** in that the acidic aqueous solution of step b) is obtained by dissolving in water a sodium compound which has been selected from among the following: sodium chloride, sodium hydroxide, sodium sulfate, and sodium carbonate.

26. A process according to any of Claims 21-25, **characterized** in that in step b) the molar ratio Na/Fe(III) in the acidic aqueous solution is adjusted to a value in the order of 0.3-1.0.

27. A process according to any of Claims 21-26, **characterized** in that in step b) the molar ratio OH/Fe(III) of the acidic aqueous solution is adjusted by means of a base to a value in the order of 0.8-1.3.

28. A process according to any of Claims 21-17, **characterized** in that in step b) the concentration of iron in the acidic aqueous solution is adjusted to 10-200 g/l, calculated as pure iron.

## Patentansprüche

1. Verfahren zur Herstellung einer Sulfat- und Hydroxid enthaltenden Eisen(III)-Verbindung, welche ausgewählt ist aus Eisen(III)-hydroxysulfat und Natriumjarosit, dadurch gekennzeichnet, daß es die Schritte umfaßt:
a) Herstellung eines Eisen(III)-Salzes auf Sulfat- und/oder Chloridbasis, das in einer sauren wäßrigen Lösung löslich ist,
a1) durch Rückgewinnen eines Eisen(III)-Salzes auf Sulfat- und/oder Chloridbasis, das als ein Produkt eines industriellen Verfahrens erhalten wird, welches in einer sauren wässrigen Lösung löslich ist,
a2) durch Oxidieren von Eisen(II)-sulfat, FeSO₄, in einer Schwefelsäurelösung,
a3) durch Sulfatieren von Eisen(III)-hydroxid, Fe(OH)₃, mit Schwefelsäure,
a4) durch Chlorsulfatieren von Eisen(III)-hydroxid, Fe(OH)₃, mit Schwefelsäure und Chlorwasserstoffsäure,
a5) durch Chlorieren von Eisen(III)-hydroxid, Fe(OH)₃, mit Chlorwasserstoffsäure oder
a6) durch Oxidieren von Eisen(II)-chlorid, FeCl₂, in einer Chlorwasserstoffsäurelösung,
mit der Maßgabe, daß wenn Natriumjarosit hergestellt wird, Sauerstoff, O₂, für die Oxidation verwendet wird,
b) Herstellen einer sauren wäßrigen Lösung des Eisen(III)-Salzes auf Sulfat- und/oder Chloridbasis,
c) Halten der sauren wäßrigen Lösung in Gegenwart von Sulfationen für 2 - 12 h bei einer Temperatur von 150 bis 220 °C, falls Eisen(III)-hydroxysulfat hergestellt wird, oder für 2 - 12 h bei einer Temperatur von 120 bis 140 °C, falls Natriumjarosit hergestellt wird, um ein Präzipitat der Sulfat- und Hydroxid enthaltenden Eisen(III)-Verbindung durch Hydrolyse herzustellen, und
d) Abtrennen der Sulfat- und Hydroxid enthaltenden Eisen(III)-Verbindung, welche ausgewählt ist aus Eisen(III)-hydroxysulfat und Natriumjarosit, in einer reinen und festen Form aus der sauren wäßrigen Lösung.

2. Verfahren nach Anspruch 1, dadurch gekennzeichnet, daß das Eisen(III)-Salz auf Sulfat- und/oder Chloridbasis in Schritt a) durch Oxidieren von Eisen(II)-sulfat, FeSO₄, und/oder Eisen(II)-chlorid, FeCl₂, erhalten wird.

3. Verfahren nach Anspruch 2, dadurch gekennzeichnet, daß das Eisen(II)-sulfat, FeSO₄, in Schritt a2) mit Schwefelsäure und einem Oxidationsmittel dadurch oxidiert wird, daß sie miteinander in einer wäßrigen Lösung bei einer Temperatur von 80 bis 160 °C und einem Druck von 3 bis 10 bar, vorzugsweise bei einer Temperatur von 120 bis 130 °C und einem Druck von 5 bis 7 bar in Kontakt gebracht werden, wobei Eisen(III)-sulfat, Fe₂(SO₄)₃, erzeugt wird.

4. Verfahren nach Anspruch 3, dadurch gekennzeichnet, daß in Schritt a) Schwefelsäure und Eisen(II)-sulfat, FeSO_{4,} in solchen Mengen verwendet werden, daß das molare Verhältnis SO₄/Fe (II) 1,10 bis 1,50 sein wird.

5. Verfahren nach Anspruch 1 oder 2, dadurch gekennzeichnet, daß die Schritte a) bis c) im wesentlichen gleichzeitig durchgeführt werden.

6. Verfahren nach Anspruch 2 oder 5, dadurch gekennzeichnet, daß die Oxidation von Schritt a) und die Hydrolyse von Schritt c) dadurch kombiniert werden, daß bewirkt wird, daß das Eisen(II)-sulfat oder das Eisen(II)-sulfat und Eisen(II)-chlorid mit Wasser und einem Oxidationsmittel für 2 - 12 h bei einer Temperatur von 60 - 220 °C reagieren, falls Eisen(III)-hydroxysulfat hergestellt wird, und bei 120 - 140 °C, falls Natriumjarosit hergestellt wird.

7. Verfahren nach einem der Ansprüche 2 bis 6, dadurch gekennzeichnet, daß das Eisen(II)-sulfat oder Eisen(II)-chlorid in Schritt a2) bzw. a6) in Form einer Ätzsäure auf Schwefelsäure- oder Chlorwasserstoffsäurebasis eingebracht wird.

8. Verfahren nach einem der Ansprüche 2 bis 7, dadurch gekennzeichnet, daß das in Schritt a2) oder a6) verwendete Oxidationsmittel Sauerstoff, Salpetersäure, Chlor, Wasserstoffperoxid, Natriumchlorat und/oder Luft, vorzugsweise Sauerstoff, ist.

9. Verfahren nach Anspruch 1, dadurch gekennzeichnet, daß das Eisen(III)-Salz auf Sulfat- und/oder Chloridbasis in den Schritten a3) bis a5) durch Umsetzen von Eisen(III)-hydroxid mit Schwefelsäure und/oder Chlorwasserstoffsäure erhalten wird.

10. Verfahren nach Anspruch 9, dadurch gekennzeichnet, daß Eisen(III)-hydroxid in Schritt a4) mit Schwefelsäure und/oder Chlorwasserstoffsäure dadurch umgesetzt wird, daß sie miteinander in einer wäßrigen Lösung bei einer Temperatur von 40 - 140 °C, vorzugsweise bei einer Temperatur von 60 - 100 °C, in Kontakt gebracht werden.

11. Verfahren nach einem der vorhergehenden Ansprüche, dadurch gekennzeichnet, daß in Schritt b) das molare Verhältnis SO₄/Fe(III) in der sauren wäßrigen Lösung auf einen Wert in der Größenordnung von 0,6 bis 1,7 eingestellt wird.

12. Verfahren nach einem der vorhergehenden Ansprüche, dadurch gekennzeichnet, daß die Konzentration von Sulfat in der sauren wäßrigen Lösung von Schritt b) durch Zugeben von Magnesiumsulfat und/oder Natriumsulfat eingestellt wird.

13. Verfahren nach einem der vorhergehenden Ansprüche, dadurch gekennzeichnet, daß in Schritt b) Magnesiumsulfat und/oder Natriumsulfat in einer solchen Menge zugegeben wird, daß ein wesentlicher Anteil des Eisen(III)-Salzes auf Chloridbasis in dem Hydrolyseschritt c) in eine Eisen(III)-Verbindung auf Sulfat- und Hydroxidbasis übergeführt wird.

14. Verfahren nach einem der vorhergehenden Ansprüche, dadurch gekennzeichnet, daß der pH-Wert der sauren wäßrigen Lösung von Schritt b) auf 1,14 bis 2,00, vorzugsweise 1,70 bis 1,80, eingestellt wird und vorzugsweise bei diesem Wert während des Ablaufs von Schritt c) gehalten wird.

15. Verfahren nach einem der vorhergehenden Ansprüche, dadurch gekennzeichnet, daß das Erwärmen in Schritt c) von 3 bis 8 h ist.

16. Verfahren nach einem der vorhergehenden Ansprüche, dadurch gekennzeichnet, daß in Schritt c) das Erwärmen bei einem Druck von 3 bis 15 bar, vorzugsweise bei einem Druck von 5 bis 10 bar, stattfindet.

17. Verfahren nach einem der vorhergehenden Ansprüche, dadurch gekennzeichnet, daß die Prozeduren der Schritte a) bis c) ohne ein Alkalimetall durchgeführt werden, wobei in diesem Fall ein reines und festes Eisen(III)-hydroxysulfat aus Schritt d) gewonnen wird.

18. Verfahren nach Anspruch 17, dadurch gekennzeichnet, daß in Schritt b) das molare Verhältnis SO₄/Fe(III) 1,34 bis 1,50, vorzugsweise 1,34 bis 1,40 ist.

19. Verfahren nach Anspruch 17 oder 18, dadurch gekennzeichnet, daß in Schritt c) die saure wäßrige Lösung bei einer Temperatur von 170 - 200 °C, vorzugsweise bei einer Temperatur von 170 - 180 °C, gehalten wird.

20. Verfahren nach einem der Ansprüche 17 bis 19, dadurch gekennzeichnet, daß die Konzentration von Eisen in der sauren wäßrigen Lösung von Schritt b) auf einen Wert von 30 bis 200 g/l, vorzugsweise auf einen Wert von 100 bis 200 g/l, eingestellt wird.

21. Verfahren nach einem der Ansprüche 1 bis 15, dadurch gekennzeichnet, daß in Schritt b) eine saure wäßrige Lösung hergestellt wird, die zusätzlich zu Sulfat-, Eisen(III)- und gegebenenfalls Chloridionen auch eine wasserlösliche Natriumverbindung umfaßt, wobei in diesem Fall in Schritt c) eine reine und feste Eisen(III)-Verbindung auf Sulfat- und Hydroxidbasis gebildet wird, die Natriumjarosit ist.

22. Verfahren nach Anspruch 21, dadurch gekennzeichnet, daß in Schritt b) die saure wäßrige Lösung zum Teil mit einer Base vor dem Erwärmen von Schritt c) neutralisiert wird.

23. Verfahren nach Anspruch 22, dadurch gekennzeichnet, daß in Schritt b) die Neutralisation teilweise mit einer Base durchgeführt wird, die Natriumhydroxid oder Natriumcarbonat ist.

24. Verfahren nach einem der Ansprüche 21 bis 23, dadurch gekennzeichnet, daß die Prozeduren der Schritte a) und b) kombiniert werden durch Herstellen eines Eisen(III)-Salzes auf Sulfat und/oder Chloridbasis in situ in einer sauren wäßrigen Lösung eines Natriumsalzes.

25. Verfahren nach einem der Ansprüche 21 bis 24, dadurch gekennzeichnet, daß die saure wäßrige Lösung von Schritt b) durch Lösen einer Natriumverbindung in Wasser hergestellt wird, welche ausgewählt wurde unter den folgenden: Natriumchlorid, Natriumhydroxid, Natriumsulfat und Natriumcarbonat.

26. Verfahren nach einem der Ansprüche 21 bis 25, dadurch gekennzeichnet, daß in Schritt b) das molare Verhältnis Na/Fe(III) in der sauren wäßrigen Lösung auf einen Wert in der Größenordnung von 0,3 bis 1,0 eingestellt wird.

27. Verfahren nach einem der Ansprüche 21 bis 26, dadurch gekennzeichnet, daß in Schritt b) das molare Verhältnis OH/Fe(III) der sauren wäßrigen Lösung mit einer Base auf einen Wert in der Größenordnung von 0,8 bis 1,3 eingestellt wird.

28. Verfahren nach einem der Ansprüche 21 bis 27, dadurch gekennzeichnet, daß in Schritt b) die Konzentration von Eisen in der sauren wäßrigen Lösung auf 10 bis 200 g/l, berechnet als reines Eisen, eingestellt wird.

## Revendications

1. Procédé de préparation d'un composé ferrique contenant des ions sulfate et hydroxyde, qui est choisi parmi l'hydroxysulfate ferrique et la jarosite de sodium, **caractérisé** en ce qu'il comprend les étapes consistant à :
a) préparer un sel ferrique à base d'ions sulfate et/ou chlorure soluble dans une solution aqueuse acide
a1) en récupérant un sel ferrique à base d'ions sulfate et/ou de chlorure obtenu comme produit dans un procédé industriel, soluble dans une solution aqueuse acide,
a2) en oxydant du sulfate ferreux FeSO₄ en solution dans de l'acide sulfurique,
a3) en sulfatant de l'hydroxyde ferrique Fe(OH)₃ avec de l'acide sulfurique,
a4) en chlorosulfatant de l'hydroxyde ferrique Fe(OH)₃ avec de l'acide sulfurique et de l'acide chlorhydrique,
a5) en chlorant de l'hydroxyde ferrique Fe(OH)₃ avec de l'acide chlorhydrique, ou
a6) en oxydant du chlorure ferreux FeCl₂ en solution dans de l'acide chlorhydrique,
à condition que, lorsque l'on prépare de la jarosite de sodium, on utilise de l'oxygène O₂ pour l'oxydation,
b) préparer une solution aqueuse acide dudit sel ferrique à base d'ions sulfate et/ou chlorure,
c) maintenir ladite solution aqueuse acide en présence d'ions sulfate pendant 2 à 12 h à une température de 150 à 220°C, si on prépare de l'hydroxysulfate ferrique, ou pendant 2 à 12 h à une température de 120 à 140°C, si on prépare de la jarosite de sodium, pour produire un précipité dudit composé ferrique contenant des ions sulfate et hydroxyde par hydrolyse, et
d) séparer ledit composé ferrique contenant des ions sulfate et hydroxyde, qui est choisi parmi l'hydroxysulfate ferrique et la jarosite de sodium, sous forme pure et solide de ladite solution aqueuse acide.

2. Procédé selon la revendication 1, **caractérisé** en ce que l'on obtient le sel ferrique à base d'ions sulfate et/ou chlorure dans l'étape a) par oxydation de sulfate ferreux FeSO₄ et/ou de chlorure ferreux FeCl₂.

3. Procédé selon la revendication 2, **caractérisé** en ce que l'on oxyde le sulfate ferreux FeSO₄ dans l'étape a2) avec de l'acide sulfurique et un oxydant en les mettant en contact les uns avec les autres dans une solution aqueuse à une température de 80 à 160°C et sous une pression de 3 à 10 bars (0,3 à 1 MPa), de préférence à une température de 120 à 130°C, et une pression 5 à 7 bars (0,5 à 0,7 MPa), ce qui permet de produire du sulfate ferrique Fe₂(SO₄)₃.

4. Procédé selon la revendication 3, **caractérisé** en ce que l'on utilise dans l'étape a), de l'acide sulfurique et du sulfate ferreux FeSO₄, en des quantités telles que le rapport molaire SO₄/Fe(II) soit de 1,10 à 1,50.

5. Procédé selon la revendication 1 ou 2, **caractérisé** en ce que l'on effectue les étapes a) à c) essentiellement simultanément.

6. Procédé selon la revendication 2 ou 5, **caractérisé** en ce qu'on combine l'oxydation de l'étape a) et l'hydrolyse de l'étape c) en faisant réagir le sulfate ferreux, ou le sulfate ferreux et le chlorure ferreux, avec de l'eau et un oxydant pendant 2 à 12 h à une température de 60 à 220°C si on prépare de l'hydroxysulfate ferrique et de 120 à 140°C si on prépare de la jarosite de sodium.

7. Procédé selon l'une quelconque des revendications 2 à 6, **caractérisé** en ce que l'on introduit le sulfate ferreux ou le chlorure ferreux dans l'étape a2) ou a6), respectivement sous la forme d'un acide décapant à base d'acide sulfurique ou d'acide chlorhydrique.

8. Procédé selon l'une quelconque des revendications 2 à 7, **caractérisé** en ce que l'oxydant utilisé dans l'étape a2) ou a6) est de l'oxygène, de l'acide nitrique, du chlore, de l'eau oxygénée, du chlorate de sodium, et/ou de l'air, et de préférence de l'oxygène.

9. Procédé selon la revendication 1, **caractérisé** en ce que l'on obtient le sel ferrique à base d'ions sulfate/et/ou chlorure dans les étapes a3) à a5) en faisant réagir de l'hydroxyde ferrique avec de l'acide sulfurique et/ou de l'acide chlorhydrique.

10. Procédé selon la revendication 9, **caractérisé** en ce qu'on fait réagir de l'hydroxyde ferrique dans l'étape a4) avec de l'acide sulfurique et/ou de l'acide chlorhydrique en les mettant en contact les uns avec les autres dans une solution aqueuse à une température de 40 à 140°C, et de préférence à une température de 60 à 100°C.

11. Procédé selon l'une quelconque des revendications précédentes, **caractérisé** en ce que dans l'étape b), on ajuste le rapport molaire SO₄/Fe(III) dans la solution aqueuse acide à une valeur de l'ordre de 0,6 à 1,7.

12. Procédé selon l'une quelconque des revendications précédentes, **caractérisé** en ce qu'on ajuste la concentration en ions sulfate de la solution aqueuse acide de l'étape b) en ajoutant du sulfate de magnésium et/ou du sulfate de sodium.

13. Procédé selon l'une quelconque des revendications précédentes, **caractérisé** en ce que dans l'étape b), on ajoute du sulfate de magnésium et/ou du sulfate de sodium en une quantité telle qu'une proportion importante du sel ferrique à base d'ions chlorure, soit transformée, dans l'hydrolyse de l'étape c), en un composé ferrique à base d'ions sulfate et hydroxyde.

14. Procédé selon l'une quelconque des revendications précédentes, **caractérisé** en ce qu'on ajuste le pH de la solution aqueuse acide de l'étape b) à une valeur de 1,14 à 2,00, de préférence à une valeur de 1,70 à 1,80, et en ce qu'on le maintient de préférence à cette valeur pendant tout le procédé de l'étape c).

15. Procédé selon l'une quelconque des revendications précédentes, **caractérisé** en ce qu'on effectue le chauffage dans l'étape c) pendant 3 à 8 h.

16. Procédé selon l'une quelconque des revendications précédentes, **caractérisé** en ce que dans l'étape c), on effectue le chauffage sous une pression de 3 à 15 bars (0,3 à 1,5 MPa), et de préférence sous une pression de 5 à 10 bars (0,5 à 1 MPa).

17. Procédé selon l'une quelconque des revendications précédentes, **caractérisé** en ce que l'on effectue les procédés des étapes a) à c) en l'absence de métal alcalin, auquel cas on récupère un hydroxysulfate ferrique pur et solide à la suite de l'étape d).

18. Procédé selon la revendication 17, **caractérisé** en ce que dans l'étape b), le rapport molaire SO₄/Fe(III) vaut de 1,34 à 1,50, et de préférence de 1,34 à 1,40.

19. Procédé selon la revendication 17 ou 18, **caractérisé** en ce que dans l'étape c), on maintient la solution aqueuse acide à une température de 170 à 200°C, et de préférence à une température de 170 à 180°C.

20. Procédé selon l'une quelconque , des revendications 17 à 19, **caractérisé** en ce qu'on ajuste la concentration du fer dans la solution aqueuse acide de l'étape b) à une valeur de 30 à 200 g/l, et de préférence à une valeur de 100 à 200 g/l.

21. Procédé selon l'une quelconque des revendications 1 à 15, **caractérisé** en ce qu'on prépare dans l'étape b), une solution aqueuse acide qui comprend, en plus des ions sulfate, ferrique et éventuellement chlorure, un composé de sodium soluble dans l'eau, auquel cas il se forme dans l'étape c), un composé ferrique à base d'ions sulfate et hydroxyde pur et solide, qui est la jarosite de sodium.

22. Procédé selon la revendication 21, **caractérisé** en ce que dans l'étape b), on neutralise partiellement la solution aqueuse acide avec une base avant le chauffage de l'étape c).

23. Procédé selon la revendication 22, **caractérisé** en ce que dans l'étape b), on effectue partiellement la neutralisation avec une base qui est de l'hydroxyde de sodium ou du carbonate de sodium.

24. Procédé selon l'une quelconque des revendications 21 à 23, **caractérisé** en ce qu'on combine les procédés des étapes a) et b) en préparant in situ un sel ferrique à base d'ions sulfate et/ou chlorure dans une solution aqueuse acide d'un-sel de sodium.

25. Procédé selon l'une quelconque des revendications 21 à 24, **caractérisé** en ce qu'on obtient la solution aqueuse acide de l'étape b) en dissolvant dans l'eau un composé de sodium que l'on a choisi parmi les composés suivants : du chlorure de sodium, de l'hydroxyde de sodium, du sulfate de sodium et du carbonate de sodium.

26. Procédé selon l'une quelconque des revendications 21 à 25, **caractérisé** en ce que dans l'étape b), on ajuste le rapport molaire Na/Fe(III) dans la solution aqueuse acide à une valeur de l'ordre de 0,3 à 1,0.

27. Procédé selon l'une quelconque des revendications 21 à 26, **caractérisé** en ce que dans l'étape b), on ajuste le rapport molaire OH/Fe(III) de la solution aqueuse acide à l'aide d'une base a une valeur de l'ordre de 0,8 à 1,3.

28. Procédé selon l'une quelconque des revendications 21 à 27, **caractérisé** en ce que dans l'étape b), on ajuste la concentration du fer dans la solution aqueuse acide à une valeur de 10 à 200 g/l, exprimée en fer pur.
